# FASCICULE DE BREVET EUROPEEN

(11) **EP 3 097 678 B1**
(45) Date de publication et mention de la délivrance du brevet: **02.05.2018**
(21) Numéro de dépôt: 15705655.7
(22) Date de dépôt: 23.01.2015
(51) Int. Cl.: H04L 29/08, G06F 17/30

(54) **PLATEFORME INFORMATIQUE ET ELECTRONIQUE DE PILOTAGE D'EQUIPEMENTS URBAINS**
COMPUTERISIERTE UND ELEKTRONISCHE PLATTFORM ZUR ANSTEUERUNG VON URBANER AUSRÜSTUNG
COMPUTERIZED AND ELECTRONIC PLATFORM FOR DRIVING URBAN EQUIPMENT

(30) Priorité: 24.01.2014 FR 1450596
(43) Date de publication de la demande: 30.11.2016
(73) Titulaire: INEO Homeland, 92059 Paris La Défense Cedex (FR)
(72) Inventeur: MICHAUD, Stéphane, F-92350 Le Plessis Robinson (FR); MONTOYA, David, F-92130 Issy les Moulineaux (FR); SIGNORILE, Franck, F-91200 Athis-Mons (FR)
(74) Mandataire: Breesé, Pierre
(86) Numéro de dépôt international: PCT/FR2015/050167
(87) Numéro de publication internationale: WO 2015/110766

(56) Documents cités:
- WO-A1-2008/069409
- US-A1- 2013 013 544
- US-A1- 2013 262 557

## Description

### Domaine de l'invention

La présente invention concerne le domaine des plateformes urbaines destinées au pilotage informatiques d'équipements matériels et de sous-systèmes.

Ces équipements comprennent par exemple les lampadaires d'éclairage urbain, les caméras de vidéo protection, les bornes de recharge électrique de véhicules à usage collectif, les capteurs sonores, de pollution, etc.

Les sous-systèmes sont par exemple un autre superviseur d'équipements, par exemple pour l'acquisition des temps d'attente dans un service public.

On entendra par « urbain » au sens du présent brevet des lieux d'usage collectif, tels que des collectivités territoriales (villes, village) mais aussi des quartiers, des espaces commerciaux ou résidentiels.

### Etat de la technique

On connaît dans l'état de la technique la demande de brevet internationale WO2013001227 se rapportant à un procédé de configuration d'une entité physique dans un système de supervision et de contrôle intégré dans un réseau de communication, le système comportant une pluralité de capteurs. Le procédé comporte les étapes suivantes :
- détection de la présence d'une entité physique à configurer dans le système, par analyse d'informations reçues d'au moins une partie des capteurs, sans que l'entité physique n'utilise elle même de moyens de communication;
- sélection d'un modèle représentatif de l'entité physique détectée à partir d'une comparaison entre au moins une partie des informations reçues des capteurs et des paramètres de modèles préenregistrés de représentation d'entités physiques;

- création d'une entité logicielle représentant l'entité physique détectée, à partir du modèle sélectionné. L'invention se rapporte également à un dispositif de configuration mettant en oeuvre un tel procédé et à un système de supervision et de contrôle comportant un tel dispositif.

La demande de brevet WO2006136985 décrit un procédé de pilotage d'un réseau de commande d'éclairage. Des informations de position comprenant les coordonnées de chaque dispositif dans le réseau, sont reçues via une passerelle au niveau d'un dispositif de traitement de données dans lequel sont enregistrées les exigences fonctionnelles recensées. Les coordonnées de chaque dispositif dans le réseau, sont utilisées pour déduire la fonctionnalité requise du dispositif, sur la base des exigences fonctionnelles enregistrées, des instructions pour implémenter la fonctionnalité sont produites et les instructions sont envoyées au réseau via la passerelle.

La demande de brevet WO 2009121619 concerne un système assisté par ordinateur pour l'administration et/ou la commande d'un système de gestion d'immeuble comportant plusieurs appareils, en particulier des luminaires, capteurs et/ou transmetteurs de commandes se trouvant dans des salles différentes, qui comprend une banque de données dans laquelle sont stockées des informations concernant les appareils, les capteurs et/ou les transmetteurs de commandes du système de gestion d'immeuble, ainsi que des données sur la structure en axes et en cellules de l'immeuble. Le système est conçu pour fournir sur un écran d'affichage une interface utilisateur graphique sur laquelle est présentée une représentation graphique de l'immeuble ainsi que l'implantation des appareils, capteurs et/ou transmetteurs de commandes.

La demande de brevet internationale WO2002082400 décrit un système de détection et de stockage d'événements comportant: un dispositif de détection de véhicules relié à un point de connexion d'entrée pour détecter le passage d'un véhicule, un détecteur de feu rouge d'un feu de signalisation, un réseau de contrôle de véhicules enregistrés, un module de contrôle qui effectue une prise de vues d'une infraction en association avec le réseau de contrôle de véhicules enregistrés, un dispositif de prise d'images vidéo fournissant des images au module de contrôle, un radar, un dispositif de transmission et de réception de données relié au radar, un dispositif d'alerte d'excès de vitesse, et une commande de sémaphore reliée à un point de connexion de sortie, le système étant configuré de sorte que lors de son fonctionnement un film est généré afin que lorsqu'un événement a lieu, on obtient un film des instants précédant l'événement, au cours de l'événement et après l'événement. L'invention concerne également un procédé de détection d'événements mettant en oeuvre ledit système.

On connaît également la demande de brevet américaine US2013/013544 décrivant un dispositif d'intergiciel exclusif de ville ubiquitaire permettant de fournir des services à une ville ubiquitaire. Le dispositif d'intergiciel joue un rôle qui est équivalent à celui du cerveau humain par la collecte d'information de ville ubiquitaire à travers des réseaux câblés et sans fil convergents, l'analyse de l'information collectée, et la découverte du service optimal sur la base d'une commande donnée et d'une information déduite concernant un contexte courant, et exécute le service. L'intergiciel exclusif de ville ubiquitaire fonctionne selon un procédé à trois niveaux au moyen d'une infrastructure de ville ubiquitaire et d'un portail de ville ubiquitaire et exécute diverses fonctions qui y sont intégrées, le procédé de fonctionnement et l'exécution des fonctions utilisant le système de fonctionnement d'ordinateurs généraux.

### Inconvénients de l'art antérieur

Les plateformes de pilotage urbain de l'art antérieur nécessitent une programmation lourde à chaque modification du parc d'équipements, et en particulier lors de l'ajout de nouvelles catégories d'équipements à piloter.

La modification de la programmation peut conduire à des pertes de cohérence du fonctionnement global de la plateforme, et des interactions mal maîtrisées entre les différentes données traitées.

Enfin, les solutions de l'art antérieur dissocient le traitement des informations destinées au pilotage technique des équipements par les services techniques de la collectivité territoriale, et le traitement des informations, généralement effectué sur une autre plateforme technique, pour fournir les informations destinées aux élus et services administratifs, pour la conduite de choix stratégiques nécessitant des informations plus synthétiques.

Les solutions de l'art antérieur impliquent ainsi une redondance de moyens techniques, et présentent un faible degré d'évolutivité et d'extension à de nouvelles catégories d'équipements ou de nouveaux traitements.

Le problème technique résolu est celui de la modularité du système de pilotage, permettant de configurer et reconfigurer le pilotage de multiples équipements, de nature hétérogène, par des interventions simples, évitant une modification du programme de pilotage.

### Solution apportée par l'invention

Afin de remédier aux inconvénients de l'art antérieur, la présente invention concerne selon son acception la plus générale une plateforme informatique et électronique de pilotage d'équipements urbains de différentes catégories caractérisée en ce qu'elle comporte une base d'information dans laquelle sont enregistrées :
- des représentations numériques catégorielles de chacune des catégories, la dite représentation numérique catégorielles étant constituée
   ∘ d'une pluralité d'attributs propres à la catégorie considérée
   ∘ de scripts fonctionnels commandant des traitements appliqués périodiquement
- pour chacun des équipements, un objet numérique dont la structure est déterminée par la représentation numérique associée à la catégorie, et dont les valeurs d'attribut sont déterminées en fonction de l'état physique de l'équipement associé
- d'une couche de dialogue et d'interfaçage, commune auxdites représentations numériques, et assurant les échanges d'informations numériques entre les équipements de chacune des catégories et l'objet numérique associé,
- de pilotes de communication associés à chacun des équipements, assurant la conversion de données physiques en données numériques destinés au rafraîchissement des valeurs d'attributs des objets numériques associés auxdits équipements.

Avantageusement, ladite base d'informations comprend en outre des représentations numériques globalisées, constituées :
∘ d'une pluralité d'attributs propres à un regroupement de représentations catégorielles liées
∘ de scripts fonctionnels commandant des traitements appliqués périodiquement
   - pour un sous-ensemble hétérogène d'équipements, un objet numérique globalisé dont la structure est déterminée par la représentation numérique associée audit sous-ensemble, et dont les valeurs d'attribut sont calculées en fonction des valeurs d'attributs des objets numériques catégoriels liés dudit sous-ensemble.

Selon un mode de réalisation particulier, au moins des valeurs d'attribut d'un d'attribut d'un objet numérique globalisées est calculée en fonction d'une donnée numérique provenant d'une source autre qu'une représentation catégorielle liée.

Selon une variante, une au moins des valeurs d'attribut d'un objet numérique globalisées est calculée en fonction des valeurs d'attributs des objets numériques catégoriels liés liées dudit sous-ensemble, le traitement de calcul étant choisi parmi une famille de traitement comprenant :
- une sommation de valeurs d'attributs des objets numériques liés
- un calcul de maximum, de minimum, de médiane ou de moyenne de valeurs d'attributs des objets numériques liés
- un opérateur logique ou une fonction logique appliquée aux objets numériques liés
- une opération conditionnelle appliquée aux objets numériques liés.

De préférence, la fréquence des échanges d'informations numériques entre les équipements de chacune des catégories et l'objet numérique associé commandés par la couche de dialogue et d'interfaçage est constante
- et en ce que la plateforme comporte un circuit de commande d'une périodicité variable des traitements de calcul des valeurs d'attribut des objets numériques globalisés en fonction des valeurs d'attributs des objets numériques catégoriels liés dudit sous-ensemble, la périodicité de calcul des objets numériques globalisés étant inférieure à la périodicité de calcul des attributs des objets numériques liés.

Selon une autre variante, certains desdits équipements sont statistiques, certains desdits équipements étant mobiles et pourvus de moyens de géolocalisation dont l'état est transmis au pilote de communication par une liaison radio-fréquence.

Selon un autre exemple de réalisation, la plateforme comporte en outre au moins un terminal de visualisation commandé par un calculateur en fonction des valeurs d'attributs d'une partie au moins des objets numériques globalisés ou des objets numériques catégoriels.

Avantageusement, ledit terminal de visualisation comporte en outre des moyens pour transmettre des informations de commande traitées par les fonctions d'une partie au moins desdits objets numériques catégoriels, pour commander le changement d'état des équipements associés.

Selon une autre variante, la plateforme comporte en outre des moyens automatisés pour transmettre des informations de commande traitées par les fonctions d'une partie au moins desdits objets numériques catégoriels, afin de commander le changement d'état des équipements associés.

Selon un mode de réalisation particulier, la base d'informations comporte en outre un enregistrement de valeurs de références, et des moyens de comparaison périodique entre lesdites valeurs d'attributs et lesdites valeurs de référence pour déclencher conditionnellement une action.

De préférence, certaines au moins des valeurs d'attributs sont enregistrées avec une historisation des variations desdites valeurs.

### Description détaillée d'un exemple non limitatif de réalisation

La présente invention sera mieux comprise à la lecture de la description qui suit, correspondant à un exemple non limitatif de réalisation où :

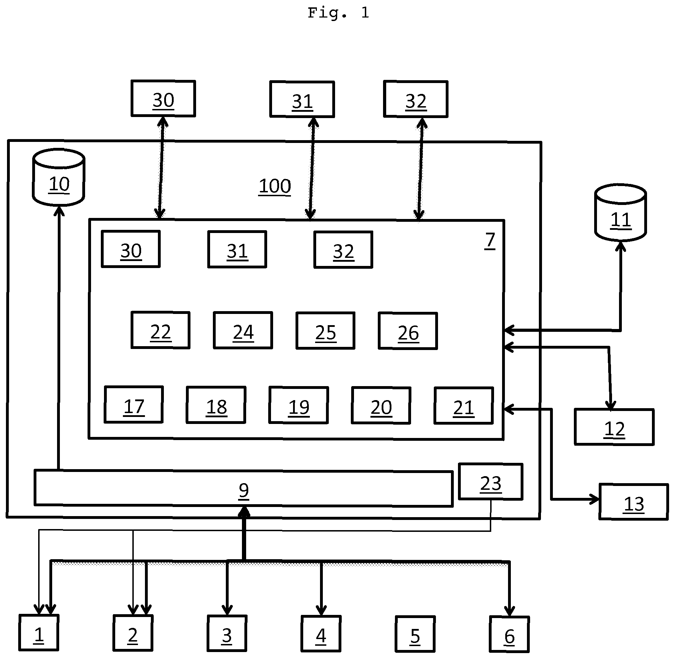

- la figure 1 représente un schéma de principe d'un système selon l'invention

La figure 1 représente une vue schématique d'un système selon l'invention.

Il comporte une pluralité d'équipements urbains échangeant des informations numériques avec un système de pilotage informatiques d'équipements matériels et de sous-systèmes.

Ces équipements comportent :
- des caméras (1) de vidéosurveillance. Ces caméras peuvent être des caméras fixes, captant une image en continu ou périodiquement, avec un angle de vue déterminé et envoyant un flux vidéo. Elles peuvent aussi être des caméras pilotables, comportant des moyens motorisés permettant de modifier l'angle de vue et le zoom à partir d'informations de pilotage provenant de la plateforme qui sera décrite ci-après
- des éclairages urbains (2) comportant des moyens de commande du niveau d'éclairement (gradation) pilotables par la plateforme, et comportant des capteurs pour détecter des pannes ou des niveaux d'éclairage ambiant, et des capteurs de données de puissance et délivrant des signaux numériques disponibles par la plateforme
- des bornes de recharge de véhicules électriques (3) comportant des moyens d'identification par un utilisateur, délivrant des données numériques d'identification traitées par le serveur pour calculer l'autorisation d'activer l'alimentation, et des moyens de pilotage de la recharge par la plateforme en fonction des données transmises par la borne à partir de l'identification de l'utilisateur, et de données endogènes telles la situation « heure pleines/heures creuses »
- des sources de données numériques (4, 5) provenant d'un serveur http ou ftp, par exemple de sites internet, hébergeant des données en accès libre, par exemple des données météorologiques, des données relatives à la circulation, et plus généralement toute donnée publique fournies notamment par une administration ou un service publique. Certaines sources (5) sont constituées par des superviseurs agrégeant des données provenant d'autres équipements, et fournissant des données numériques calculés en fonction de ces données extérieures
- Des équipements mobiles (6), par exemples des téléphones cellulaires (smartphone) permettant à une personne de délivrer des informations géolocalisées, par exemple des données relatives à un accident ou un signalement d'un événement.

Chacun de ces équipements (1 à 6) comprend un pilote de communication assurant :
- la conversation des signaux numériques ou analogiques fournis par un ou plusieurs capteurs pour les mettre en forme en conformité avec un protocole et une structure de données unifiée, propre à la plateforme
- et/ou fournir des signaux numériques ou analogiques de commande d'un moyen électromécanique d'un ou de plusieurs équipements (1 à 6) en fonction des informations provenant de la plateforme, selon un protocole et une structure de données unifiée.

Généralement, un seul pilote est interfacé avec plusieurs équipements de même nature.

La plateforme (100) comporte une interface de programme ouverte permettant à des intégrateurs de développer directement les pilotes d'équipements non disponibles en standard sur la plateforme.

La plateforme comporte également une bibliothèque de pilotes téléchargeables (23) en vue de leur installation sur un système informatique destiné à dialoguer avec la plateforme.

La plateforme comporte un serveur central (7) hébergeant le méta-modèle de l'application de pilotage, et assurant la conservation des données numériques dans une base de données relationnelle (par exemple SQL). Cette base de données est organisée sous forme d'un ensemble de tables correspondant chacune à un type d'objets (ou modèle d'objet).

La structure des tables est définie dynamiquement, en fonction des contraintes du projet et de la nature des objets à superviser.

Les objets sont décrits par une structure hiérarchique à l'aide d'une application de modélisation (8) pour la création de cartes, de modèles d'objets, etc.

La modélisation définit une hiérarchie de niveaux reliés par des relations de type 1 vers N entre le niveau supérieur et le niveau inférieur.

A titre d'exemple, le niveau supérieur correspond à la « VILLE », le niveau suivant correspond au « QUARTIER », et le niveau inférieur à l'EQUIPEMENT.

Les relations sont de type « appartenance », définissant une relation « parent/ enfants ». Elles sont paramétrées par un outil de gestion des objets et relations (16).

Ces relations définissent la structuration arborescente des objets à l'aide d'un outil de modélisation (15). Cette structuration définit les traitements d'agrégation des données unitaires provenant des équipements, pour calculer des données agrégées significatives au niveau d'un niveau supérieur. Ces données agrégées sont par exemple :
- le nombre de capteurs défaillants ou dans un état particulier, dans le niveau concerné
- la puissance moyenne, sommée ou totale dans le niveau concerné.

Le traitement des données est réalisé par un moteur d'agrégation (9) en cascade, c'est-à-dire avec un premier traitement d'agrégation au niveau directement supérieur à celui des équipements (1 à 6) puis par un second traitement à partir de ces données agrégés pour calculer un nouveau niveau d'agrégation au niveau directement supérieur.

Ces traitements sont totalement modulaires, et une modification de la composition ou le nombre des équipements (1 à 6) ne nécessite pas de modification du serveur central (7).

L'ensemble des données unitaires et agrégées peuvent être archivées de manière horodatées dans un serveur d'archivage (10) en fonction d'attributs affecté à chaque propriété des modèles d'objets. Ces attributs définissent :
- la périodicité de l'archivage,
- les conditions d'archivage (par exemple seulement lorsque la valeur évolue)
- la date d'expiration, commandant l'effacement des données après un délai prédéterminé.

Cette solution permet d'optimiser les ressources affectées à l'archivage.

Le serveur central (7) est interfacé avec un serveur de messagerie (11) pour automatiser des fonctions telles que :
- l'émission de messages d'alerte
- la diffusion périodique de rapport de fonctionnement.

Il est également interfacé avec un système d'information géographique (12) fournissant les fonds de plan et le référentiel de coordonnées et de représentations graphiques (projections géographiques).

Chaque objet peut être représenté sur une projection cartographique avec une icône représentative de son positionnement, de sa nature et de son état.

Le serveur central (7) est également interfacé avec un système de rapport automatique (13) exploitant directement les données enregistrées dans la base relationnelle (8).

Le serveur comprend des moyens de gestion et de paramétrage des interactions entre les objets, en sus de l'agrégation, notamment :
- un gestionnaire de scripts permettant à un administrateur de créer des fonctions pour analyser des valeurs ou les attributs d'un objet et commandant une action
- la gestion des alarmes (17) calculant l'activation d'alarme en fonction de types d'alarme, de catégories de déclenchement, et en fonction des données agrégées ou unitaires.
- la gestion des droits des utilisateurs (18).

Le serveur central (7) comporte aussi un séquenceur (19) commandant l'activation de scripts ou de fonctions dans un ordre défini et à une périodicité prédéfinie.

Il comporte optionnellement un gestionnaire de planning (20) par exemple pour la gestion d'astreintes et un gestionnaire d'événements (21) permettant de gérer au niveau de chaque modèle d'objet un événement et la commande d'actions au niveau d'un objet associé.

Le moteur de workflow (22) permet de commander la succession de tâches.

Le serveur central (7) comporte enfin des outils de représentation des objets sous des formes graphiques (24 à 26) commandant la génération des représentations graphiques de chaque objet, et les effets graphiques en fonction de l'état de chaque objet.

Ces outils permettent d'exploiter les représentations graphiques sur des équipements en accès web, tels qu'un ordinateur (27), une tablette (28) ou un téléphone numérique de type 'smartphone' (29).

Certaines applications sont pré-paramétrées sous la forme d'un fichier de configuration et/ou d'une base de données préconfigurée (30 à 32) par exemple pour des applications de pilotage de l'éclairage urbain ou de la vidéosurveillance.

## Revendications

1. Plateforme informatique et électronique de pilotage d'équipements urbains de différentes catégories **caractérisé en ce qu'**elle comporte une base d'information (7) dans laquelle sont enregistrés :
• des représentations numériques catégorielles de chacune des catégories, la dite représentation numérique catégorielles étant constituée
∘ d'une pluralité d'attributs propres à la catégorie considérée
∘ de scripts fonctionnels commandant des traitements appliqués périodiquement
• pour chacun des équipements (1 à 6), un objet numérique dont la structure est déterminée par la représentation numérique associée à la catégorie, et dont les valeurs d'attribut sont déterminées en fonction de l'état physique de l'équipement (1 à 6) associé
• d'une couche de dialogue et d'interfaçage (9), commune auxdites représentations numériques, et assurant les échanges d'informations numériques entre les équipements (1 à 6) de chacune des catégories et l'objet numérique associé,
• de pilotes de communication téléchargeables par chacun des équipements (1 à 6), assurant la conversion de données physiques en données numériques pour les mettre en forme en conformité avec la structure de données propre à la plateforme, et destinés au rafraîchissement des valeurs d'attributs des objets numériques associés auxdits équipements (1 à 6).

2. Plateforme de pilotage d'équipements urbains selon la revendication principale **caractérisé en ce que** ladite base d'informations comprend en outre des représentations numériques globalisées, constituées :
∘ d'une pluralité d'attributs propres à un regroupement de représentations catégorielles liées
∘ de scripts fonctionnels commandant des traitements appliqués périodiquement
• pour un sous-ensemble hétérogène d'équipements, un objet numérique globalisé dont la structure est déterminée par la représentation numérique associée audit sous-ensemble, et dont les valeurs d'attribut sont calculées en fonction des valeurs d'attributs des objets numériques catégoriels liés dudit sous-ensemble.

3. Plateforme de pilotage d'équipements urbains selon la revendication précédente **caractérisé en ce qu'**une au moins des valeurs d'attribut d'un d'attribut d'un objet numérique globalisées est calculée en fonction d'une donnée numérique provenant d'une source autre qu'une représentation catégorielle liée.

4. Plateforme de pilotage d'équipements urbains selon la revendication précédente **caractérisé en ce qu'**une au moins des valeurs d'attribut d'un objet numérique globalisées est calculée en fonction des valeurs d'attributs des objets numériques catégoriels liés liées dudit sous-ensemble, le traitement de calcul étant choisi parmi une famille de traitement comprenant :
• une sommation de valeurs d'attributs des objets numériques liés
• un calcul de maximum, de minimum, de médiane ou de moyenne de valeurs d'attributs des objets numériques liés
• un opérateur logique ou une fonction logique appliquée aux objets numériques liés
• une opération conditionnelle appliquée aux objets numériques liés.

5. Plateforme de pilotage d'équipements urbains selon l'une au moins des revendication 2 à 4 **caractérisé en ce que**
• la fréquence des échanges d'informations numériques entre les équipements de chacune des catégories et l'objet numérique associé commandés par la couche de dialogue et d'interfaçage est constante
• et **en ce que** la plateforme comporte un circuit de commande d'une périodicité variable des traitements de calcul des valeurs d'attribut des objets numériques globalisés en fonction des valeurs d'attributs des objets numériques catégoriels liés dudit sous-ensemble, la périodicité de calcul des objets numériques globalisés étant inférieure à la périodicité de calcul des attributs des objets numériques liés.

6. Plateforme de pilotage d'équipements urbains selon l'une au moins des revendications précédentes **caractérisé en ce que**
• certains desdits équipements sont statistiques
• et **en ce que** certains desdits équipements sont mobiles et pourvus de moyens de géolocalisation dont l'état est transmis au pilote de communication par une liaison radio-fréquence.

7. Plateforme de pilotage d'équipements urbains selon l'une au moins des revendications précédentes **caractérisé en ce qu'**elle comporte en outre au moins un terminal de visualisation commandé par un calculateur en fonction des valeurs d'attributs d'une partie au moins des objets numériques globalisés ou des objets numériques catégoriels.

8. Plateforme de pilotage d'équipements urbains selon l'une au moins des revendications précédentes **caractérisé en ce que** ledit terminal de visualisation comporte en outre des moyens pour transmettre des informations de commande traitées par les fonctions d'une partie au moins desdits objets numériques catégoriels, pour commander le changement d'état des équipements associés.

9. Plateforme de pilotage d'équipements urbains selon l'une au moins des revendications précédentes **caractérisé en ce qu'**elle comporte en outre des moyens automatisés pour transmettre des informations de commande traitées par les fonctions d'une partie au moins desdits objets numériques catégoriels, afin de commander le changement automatique d'état des équipements associés.

10. Plateforme de pilotage d'équipements urbains selon l'une au moins des revendications précédentes **caractérisé en ce que** la base d'informations comporte en outre un enregistrement de valeurs de références, et des moyens de comparaison périodique entre lesdites valeurs d'attributs et lesdites valeurs de référence pour déclencher conditionnellement une action.

11. Plateforme de pilotage d'équipements urbains selon l'une au moins des revendications précédentes **caractérisé en ce que** certaines au moins des valeurs d'attributs sont enregistrées avec une historisation des variations desdites valeurs.

## Patentansprüche

1. Informatik- und Elektronikplattform zur Steuerung von städtischen Vorrichtungen unterschiedlicher Kategorien, **dadurch gekennzeichnet, dass** sie eine Informationsdatenbank (7) umfasst, in der Folgendes gespeichert wird:
• kategoriale Digitaldarstellungen jeder der Kategorien, wobei besagte kategoriale Digitaldarstellung besteht aus:
- einer Vielzahl an Attributen, die der entsprechenden Kategorie eigen sind,
- funktionalen Skripts, welche die regelmäßig angewandten Verarbeitungen steuern.
• für jede der Vorrichtungen (1 bis 6) ein digitales Objekt, dessen Struktur bestimmt wird durch die mit der Kategorie verknüpfte Digitaldarstellung, und dessen Attributwerte im Hinblick auf den physikalischen Zustand der verknüpften Ausrüstung (1 bis 6) bestimmt wird,
• eine Dialog- und Schnittstellenschicht (9), die den Digitaldarstellungen gemeinsam ist, und welche den digitalen Informationsaustausch zwischen den Vorrichtungen (1 bis 6) jeder der Kategorien und dem verknüpften digitalen Objekt gewährleistet,
• Kommunikationstreiber, die über jede der Vorrichtungen (1 bis 6) heruntergeladen werden können, und die Umwandlung der physikalischen Daten in digitale Daten zur Anpassung an die Datenstruktur der Plattform gewährleisten, und die dazu bestimmt sind, die Werte der Attribute der digitalen Objekte, welche mit besagten Vorrichtungen (1 bis 6) verknüpft sind, zu aktualisieren.

2. Plattform zur Steuerung städtischer Vorrichtungen gemäß dem Hauptanspruch, **dadurch gekennzeichnet, dass** besagte Informationsdatenbank des Weiteren globalisierte Digitaldarstellungen umfasst, die bestehen aus:
- einer Vielzahl an Attributen, die einer Gruppierung kategorialer verbundener Darstellungen gemeinsam sind,
- funktionalen Skripts, die die regelmäßig angewandten Verarbeitungen steuern.
• bei einer heterogenen Untereinheit von Vorrichtungen ein globalisiertes digitales Objekt, dessen Struktur bestimmt wird durch die mit besagter Untereinheit verknüpfte Digitaldarstellung und deren Attributwerte im Hinblick auf die Attributwerte der digitalen verbundenen kategorialen Objekte besagter Untereinheit berechnet werden.

3. Plattform zur Steuerung städtischer Vorrichtungen gemäß dem vorhergehenden Anspruch, **dadurch gekennzeichnet, dass** mindestens Attributwerte eines Attributs eines globalisierten digitalen Objekts im Hinblick auf einen digitalen Datenwert berechnet werden, der aus einer Quelle stammt, die keine verbundene kategoriale Darstellung ist.

4. Plattform zur Steuerung städtischer Vorrichtungen gemäß dem vorhergehenden Anspruch, **dadurch gekennzeichnet** das mindestens einer der Attributwerte eines globalisierten digitalen Objekts im Hinblick auf die verbundenen Attributwerte der verbundenen kategorialen digitalen Objekte besagter Untereinheit berechnet werden, wobei die rechnerische Verarbeitung aus einer Verarbeitungsfamilie ausgewählt wird, die folgendes umfasst:
• eine Summierung von Attributwerten der verbundenen digitalen Objekte
• die Berechnung von maximalen, minimalen, mittleren oder durchschnittlichen Attributwerten der verbundenen digitalen Objekte
• einen logischen Operator oder eine logische Funktion, der bzw. die auf die verbundenen digitalen Objekte angewendet wird
• eine konditionelle Operation, die auf die verbundenen digitalen Objekte angewandt wird.

5. Plattform zur Steuerung von städtischen Vorrichtungen gemäß mindestens einem der Ansprüche 2 bis 4, **dadurch gekennzeichnet, dass**
• die Häufigkeit des digitalen Informationsaustauschs zwischen den Vorrichtungen jeder der Kategorien und dem verknüpften digitalen Objekt, das von der Dialogschicht und der Schnittstellenschicht gesteuert wird, konstant ist,
• und dadurch, dass die Plattform einen Steuerkreis mit veränderlicher Häufigkeit der rechnerischen Verarbeitungen der Attributwerte der globalisierten digitalen Objekte im Hinblick auf Attributwerte der verbundenen kategorialen digitalen Objekte besagter Untereinheit umfasst, wobei die Häufigkeit der Berechnung der globalisierten digitalen Objekte niedriger ist als die Häufigkeit der Berechnung der verbundenen digitalen Objektattribute.

6. Plattform zur Steuerung von städtischen Vorrichtungen gemäß mindestens einem der vorhergehenden Ansprüche, **dadurch gekennzeichnet, dass**
• bestimmte Vorrichtungen statistischer Art sind,
• und dadurch, dass bestimmte Vorrichtungen beweglich und mit Ortungsmitteln versehen sind, deren Zustand dem Kommunikationstreiber über eine Funkfrequenzverbindung übermittelt wird.

7. Plattform zur Steuerung städtischer Vorrichtungen gemäß mindestens einem der vorhergehenden Ansprüche, **dadurch gekennzeichnet, dass** sie des Weiteren mindestens ein Anzeigeterminal umfasst, das von einem Rechner im Hinblick auf die Attributwerte mindestens eines Teils der globalisierten digitalen Objekte oder der kategorialen digitalen Objekte gesteuert wird.

8. Plattform zur Steuerung städtischer Vorrichtungen gemäß mindestens einem der vorhergehenden Ansprüche, **dadurch gekennzeichnet, dass** besagtes Anzeigeterminal des Weiteren Mittel zur Übertragung von Steuerungsinformationen umfasst, die durch die Funktionen von mindestens einem Teil der kategorialen digitalen Objekte verarbeitet wurden, um die Zustandsänderung der verknüpften Vorrichtungen zu steuern.

9. Plattform zur Steuerung von städtischen Vorrichtungen gemäß mindestens einem der vorhergehenden Ansprüche, **dadurch gekennzeichnet, dass** sie des Weiteren automatisierte Mittel zur Übertragung von Steuerungsinformationen enthält, die von den Funktionen mindestens eines Teils besagter kategorialer digitaler Objekte verarbeitet wurden, um die automatische Zustandsänderung der verknüpften Vorrichtungen zu steuern.

10. Plattform zur Steuerung städtischer Vorrichtungen gemäß mindestens einem der vorhergehenden Ansprüche, **dadurch gekennzeichnet, dass** die Informationsdatenbank des Weiteren gespeicherte Bezugswerte enthält, und Mittel zum regelmäßigen Vergleich besagter Attributwerte mit besagten Bezugswerten, um konditionell eine Aktion auszulösen.

11. Plattform zur Steuerung städtischer Vorrichtungen gemäß mindestens einem der vorhergehenden Ansprüche, **dadurch gekennzeichnet, dass** mindestens einige der Attributwerte mit einer Protokollierung der besagten Veränderungen besagter Werte gespeichert werden.

## Claims

1. A computing and electronic platform for driving urban equipment of various categories, **characterized in that** it comprises an information base (7) in which are recorded:
• category-based digital representations of each of the categories, with said category-based digital representation consisting of
∘ a plurality of attributes specific to the category considered
∘ functional scripts controlling processing operations applied periodically
• for each of the items of equipment (1 to 6), a digital object whose structure is determined by the digital representation associated with the category, and whose attribute values are determined as a function of the physical state of the associated item of equipment (1 to 6)
• a dialogue and interfacing layer (9) common to said digital representations, and ensuring the exchanges of digital information between the items of equipment (1 to 6) of each of the categories and the associated digital object,
• communication drivers which can be downloaded by each of the items of equipment (1 to 6), ensuring the conversion of physical data into digital data so that they comply with the structure of data specific to the platform, and intended for refreshing the attribute values of the digital objects associated with said items of equipment (1 to 6).

2. A platform for driving urban equipment according to the main claim, **characterized in that** said information base further comprises globalized digital representations, which consist of:
∘ a plurality of attributes specific to a cluster of related category-based representations
∘ functional scripts controlling processing operations applied periodically
• for a heterogeneous subset of equipment, a globalized digital object whose structure is determined by the digital representation associated with said subset, and whose attribute values are calculated as a function of the attribute values of the related category-based digital objects of said subset.

3. A platform for driving urban equipment according to the preceding claim, **characterized in that** at least one of the attribute values of an attribute of a globalized digital object is calculated as a function of a digital data originating from a source other than a related category-based representation.

4. A platform for driving urban equipment according to the preceding claim, **characterized in that** at least one of the attribute values of a globalized digital object is calculated as a function of the attribute values of the related category-based digital objects of said subset, with the calculation processing being selected from a processing family comprising:
• a summation of attribute values of the related digital objects
• a calculation of the maximum, minimum, median or average values of attributes of the related digital objects
• a logical operator or a logical function applied to the related digital objects
• a conditional operation applied to the related digital objects.

5. A platform for driving urban equipment according to at least one of claims 2 to 4, **characterized in that**
• the frequency of the exchanges of digital information between the items of equipment of each category and the associated digital object controlled by the dialogue and interfacing layer is constant
• and **in that** the platform comprises a circuit for controlling a variable periodicity of the processing operations for calculating the attribute values of the globalized digital objects as a function of the attribute values of the related category-based digital objects of said subset, with the periodicity of calculation of the globalized digital objects being lower than the periodicity of calculation of the attributes of the related digital objects.

6. A platform for driving urban equipment according to at least one of the preceding claims, **characterized in that**
• some of said items of equipment are statistics
• and **in that** some of said items of equipment are mobile and equipped with geolocation means whose state is transmitted to the communication driver by a radiofrequency link.

7. A platform for driving urban equipment according to at least one of the preceding claims, **characterized in that** it further comprises at least one display terminal controlled by a computer as a function of the attribute values of at least a part of the globalized digital objects or the category-based digital objects.

8. A platform for driving urban equipment according to at least one of the preceding claims, **characterized in that** said display terminal further comprises means for transmitting control information processed by the functions of at least a part of said category-based digital objects, to control the change in the state of the associated items of equipment.

9. A platform for driving urban equipment according to at least one of the preceding claims, **characterized in that** it further comprises automatic means for transmitting control information processed by the functions of at least a part of said category-based digital objects, to control the automatic change in the state of the associated items of equipment.

10. A platform for driving urban equipment according to at least one of the preceding claims, **characterized in that** the information base further includes a recording of reference values, and means for periodically comparing said attribute values and said reference values to conditionally trigger an action.

11. A platform for driving urban equipment according to at least one of the preceding claims, wherein at least some of the attribute values are recorded with a logging of the variations of said values.
